# EUROPEAN PATENT SPECIFICATION

(11) **EP 2 617 795 B1**
(45) Date of publication and mention of the grant of the patent: **12.12.2018**
(21) Application number: 13152104.9
(22) Date of filing: 21.01.2013
(51) Int. Cl.: C09K 19/54, C09K 19/58

(54) **Chiral nematic, liquid crystal display device**
Chirale nematische Flüssigkristallanzeigevorrichtung
Dispositif d'affichage à cristaux liquides nématiques chiraux

(30) Priority: 23.01.2012 IE 20120037
(43) Date of publication of application: 24.07.2013
(73) Proprietor: Vlyte Innovations Limited, Shannon Airport, Co. Clare (IE); Vlyte Limited, County Clare (IE)
(72) Inventor: O'Keeffe, Donal, County Clare (IE)
(74) Representative: Hanna Moore + Curley

(56) References cited:
- WO-A1-93/23496
- WO-A1-94/10260
- US-A1- 2008 316 395
- US-B1- 6 203 723

## Description

### Field

The present invention relates to a method for operating a chiral nematic, liquid crystal display device.

The invention has particular application in areas such as: light control films for use in glazing applications that are capable of switching between transparent and translucent states, or between transparent and light blocking (synonymous with dark or opaque) states, generally known as "switchable windows" or "smart windows" or "dimmable windows"; and see-through displays that comprise a matrix of pixels each capable of being selectively operated in a transparent state and a translucent or dark state, for use in applications like shop front windows, or the window of a bus or train, without blocking visual access through the window. Other applications include reflective display applications, particularly sunlight readable displays.

### Background

In a flexible, chiral nematic (synonymous with cholesteric) liquid crystal display, the liquid crystal is dispersed in a polymer matrix and sandwiched between plastic sheets. The prior art provides three types of technical approach to dispersing the liquid crystal in a polymer matrix: the first are devices generally described as 'polymer dispersed', the second are devices having replicated polymer structures, and the third are devices that microencapsulate (synonymous with encapsulate) the liquid crystal. All three provide containment for the liquid crystal fluid so that instead of the substrates sandwiching a continuous fluid phase, the substrates sandwich discrete bodies (volumes) of fluid (i.e. the fluid phase is discontinuous) surrounded by a transparent, continuous polymer matrix that spans between the substrates to provide a solid, liquid crystal film.

A problem arises when liquid crystal is dispersed as a discontinuous phase in a continuous polymer matrix because liquid crystal is birefringent. In the transparent state (synonymous with field ON state) a see-through, display device for use in window/glazing applications must be transparent to specular light over a wide range of viewing angles. In particular its inherent haze must remain acceptably low as viewing angle increases. Yet, as is known with prior art polymer dispersed, liquid crystal devices, haze increases with viewing angle due to the increasing refractive index mismatch between the polymer matrix and the birefringent liquid crystal; assuming that the polymer matrix is matched to the ordinary refractive index of the liquid crystal then as the viewing angle to the display normal increases the resulting refractive index for the liquid crystal in the transparent state comprises an increasing fraction of the extraordinary refractive index, and so mismatch and consequently haze increases with increasing viewing angle.

The requirement for clear, haze-free viewing over as extensive a range of viewing angles as possible is extremely important for window applications. A person standing directly in front of a 2M x 2M window will encounter a range of viewing angles depending on the viewer's distance from the window and on which part of the window is being looked through. If the viewer's eye is 2 meters away from the centre of the window, for example, the angle to the corner of the window is about 35 degrees; in other words, for such a window to be transparent at a distance of 2 meters, it requires a haze-free viewing angle of 35 degrees. For the same window to be transparent from a distance of 1 meter, however, increases the required haze-free viewing angle to about 55 degrees.

In patent application PCT/EP2008/005151 by the applicant, the method to minimize haze in the transparent state was to maximize the mean volume of discrete, liquid crystal volumes thereby minimizing the interface area between liquid crystal and the surrounding polymer matrix; it will be appreciated that if the electro-optical layer comprised just liquid crystal then the transparent state would be free of haze for all viewing angles. But in application PCT/EP2008/005151 the maximum discrete, liquid crystal volume was limited by its OFF state (synonymous with no applied electrical field). The OFF state used stabilized (i.e. over time) polydomain (synonymous with focal conic) texture to scatter light sufficiently to be translucent and imposed an upper limit on the dimension of the major axis of a discrete liquid crystal volume beyond which the polydomain texture was no longer stable (with respect to the scattering power available from volumes within the disclosed range). Hence there is a need for a cholesteric liquid crystal film that generally avoids an upper limit on the size of the discrete liquid crystal volumes thereby allowing the interface area between discrete liquid crystal volumes and the surrounding polymer matrix to be further minimized. There is also a need for a liquid crystal film that minimizes any increase in haze with viewing angle.

In constructing a flexible, liquid crystal film the technical approach to dispersing the liquid crystal in a polymer matrix must be considered. In two of these three approaches- polymer dispersed and replicated structures - the polymer walls that surround the discrete liquid crystal volumes are formed in situ on the polymer substrate and the liquid crystal is coated as a solution onto the substrate. Patent application PCT/EP2008/005151 by the applicant reviews the prior art for the polymer dispersed approach, in particular for switchable windows, and includes the following:
1) Polymer Dispersed Liquid Crystal (PDLC) and Nematic Curvilinear Aligned Phase (NCAP), both use nematic liquid crystal;
2) Polymer Stabilised Cholesteric Texture (PSCT); and
3) Polymer Dispersed Cholesteric Liquid Crystal (PDCLC).
The cited application also discloses a novel polymer induced phase separation method.

Information on replicated polymer structures is available from one of its proponents Sipix Inc. and their website (www.sipix.com) references articles on the use of the replicated polymer structures approach with nematic liquid crystal.

Alternatively, with microencapsulation, the liquid crystal is encapsulated by a thin polymer wall in the form of a shell (synonymous with capsule), typically spherical in shape, before being coated onto a substrate. This means that the liquid crystal fluid is in a solid form-discrete, sealed spherical volumes inside a polymer wall or skin- before being coated onto a substrate and used in a device. The known techniques for microencapsulation can be divided into two types:
a) The hydrophilic shell (synonymous with capsule) type: the bulk polymer in a shell has a dominant hydrophilic nature. Generally the prior art methods require the majority by weight of the polymer wall precursors to be water-soluble and to be solubilized in an aqueous phase at some point during the microencapsulation process.
b) The hydrophobic shell (synonymous with capsule) type: the bulk polymer in a shell has a dominant hydrophobic nature. Generally the prior art methods require the majority by weight of the polymer wall precursors to be soluble or partly soluble in the liquid crystal fluid to be microencapsulated.

The former type includes conventional and complex coacervation, and interfacial polymerization processes. US 6,120,701 discloses a technique for microencapsulating nematic liquid crystal using an interfacial polymerisation process that could be applied to microencapsulate cholesteric liquid crystal.

In the hydrophobic-shell type, a shell's wall is generally formed from hydrophobic monomers having a slight hydrophilic functionality. Ahead of microencapsulating, the monomers are solubilized partly or completely in the hydrophobic, liquid crystal fluid and as polymerization proceeds the polymer phase separates from the liquid crystal and forms at the interface with the aqueous phase and microencapsulates the liquid crystal fluid with a hydrophobic polymer wall. For examples of liquid crystal microencapsulated in this way see Rohm and Haas Company's US 5,976,405 or PolyDisplay's US 7,397,530.

Once a cholesteric liquid crystal fluid is microencapsulated it can be dispersed in a solution containing polymer matrix (synonymous with binder) precursors to form an electronic ink. This electronic ink can be coated or printed onto a variety of flexible and rigid substrates. The coated/printed ink is then formed into a solid (by curing or film forming techniques) comprising discrete volumes of liquid crystal fluid enclosed inside polymer shells that in turn are dispersed in a polymer matrix and sandwiched between film substrates having transparent electrodes. In smart window applications the resulting cholesteric liquid crystal film is laminated to regular window glass panes on both sides using adhesive sheets known as interlayers.

Another aspect of the prior art in relation to cholesteric liquid crystal devices is that the light scattering state (generally the field OFF state) is based on forming and stabilizing (over time) a polydomain state, synonymous with focal conic state, in the discrete cholesteric liquid crystal volumes. It is important to note that the polydomain state in cholesteric liquid crystal represents a limiting factor because unless it is stabilized by specific means it is not stable over time and transitions to a weakly, semi transparent state within seconds to minutes of removing an electrical field. For example, in the applicant's PCT/EP2008/005151 the method uses a molecular structure at the polymer interface to influence liquid crystal molecules to take on an alignment that diverges from the plane of the polymer surface and thereby causes (or reinforces) divergent alignment between domains within the polydomain texture. In US 5,455,083 the method to stabilize a polydomain state is to add chiral smectic C liquid crystal (i.e. a different liquid crystal phase) to cholesteric liquid crystal. In US5,437,811 and US 6,203,723 B1 polymer network is used to stabilize a polydomain/focal conic state by forming fibrous network within the liquid crystal phase (know as polymer stabilized cholesteric texture (PSCT) devices) to physically disrupt domains. In US 6,767,480 novel materials are dispersed within the cholesteric liquid crystal to stabilize the polydomain state. While the light scattering, polydomain / focal conic state of prior art devices can be stable over time, the technical approaches used impose undesirable limitations on the discrete volume that can be stabilized, or introduce undesirable elements such as polymer network or additives into a discrete liquid crystal volume that can compromise the transparent state (i.e. the field ON state). Hence, there is a need for a light scattering state (i.e. the field OFF state) that is stable over time, that allows the mean diameter of discrete liquid crystal volumes (i.e. bodies) to be up to the thickness of a display's electro-optical layer, and that does not introduce elements that compromise the transparent state.

In general, the meaning given to liquid crystal terms is consistent with the prior art:
- A liquid crystal molecule aligns to a surface, for example to a polymer interface, or to an electrical field.
- A liquid crystal director is the preferred local orientation (i.e. alignment) of liquid crystal molecules, and individual molecules can be at different angles to the director.
- The order parameter S is a way of averaging the angle a large number of liquid crystal molecules makes with the director. S = 1 if all molecules are exactly parallel with the director.
- Cholesteric liquid crystal is synonymous with chiral, nematic liquid crystal.
- Chiral nematic liquid crystal exhibits a helical structure in that the liquid crystal director is uniformly rotated or twisted perpendicular to the axis of a helix. The pitch is the distance for one full liquid crystal director rotation. The helical structure is spontaneous (i.e. it is a low energy state).
- A disclination represents an extremely small region at the interface between (or within) otherwise well defined director regions where the director changes abruptly and is really undefined as it points in many directions. A disclination therefore represents a defect and can be a point or line defect. Different types of disclination are possible and to classify a disclination a number is assigned to it based on the strength of the defect.
- A domain in cholesteric liquid crystal is defined as a region or volume that is free of disclinations or defects.
- Light scattered or transmitted by a liquid crystal body is synonymous with visible light scattered or transmitted.
- Liquid crystal texture is synonymous with morphology.

In summary, a method to minimize haze in the transparent state (according to the applicant's PCT/EP2008/005151) is to maximize the mean volume of discrete, liquid crystal bodies thereby minimizing the interface area between the liquid crystal phase and the surrounding polymer matrix phase. However prior art devices cannot meet this requirement because the light scattering state - a polydomain state, synonymous with the focal conic state - imposes an upper limit on the size of discrete cholesteric liquid crystal volumes. Hence, there is a need for a light scattering state (i.e. the field OFF state) that is strongly light scattering (i.e. translucent), that is stable over time, that allows the mean diameter of discrete liquid crystal volumes (i.e. bodies) to be up to the thickness of a display's electro-optical layer, and that does not introduce elements that compromise the transparent state.

### Summary of the Invention

The present invention provides a cholesteric, liquid crystal device according to claim 1.

In light absorbing embodiments of the present invention, the liquid crystal comprises dichroic-dye doped, chiral nematic, liquid crystal.

In embodiments of the present invention, said superstructure has a spherulite morphology. In embodiments, said spherulite morphology has axes of chiral nematic, liquid crystal helices aligned perpendicular to a surface of a polymer shell's inner wall and arranged generally in a radial direction.

In embodiments, liquid crystal molecules align to the inside wall of a shell with parallel (synonymous with planar) alignment. In said superstructure having a spherulite morphology, the index of refraction is generally spherically symmetrical and varies continuously along a radial.

In embodiments, the spherulite morphology of the light scattering/absorbing state has just one disclination line (synonymous with defect line), and the disclination line is a radial or a diametrical line, the former corresponding to defect points along the line of strength 2, while the latter corresponds to defect points of strength 1.

Accepting this one disclination line, the spherulite morphology of the light scattering/absorbing state in a generally spherical body approximates a single domain and is ordered. By contrast, the prior art's light scattering, polydomain state has multiple disclinations arising from its multiple domains.

The light scattering/absorbing state's spherulite morphology is a superstructure of the helical structures of chiral nematic, liquid crystal, and the superstructure arranges the helices in a lamellar-like structure. The lamellar-like structure comprises a first lamella having a minimum refractive index corresponding to a liquid crystal's ordinary refractive index and an average refractive index taken over adjacent liquid crystal director regions, and a second lamella having a maximum refractive index corresponding to a liquid crystal's extraordinary index and an average refractive index taken over adjacent liquid crystal director regions. The period of the laminar-like structure is half the pitch of the helical structure of a chiral nematic, liquid crystal.

In embodiments when the spherulite morphology of the light scattering/absorbing state is viewed between crossed polarizers under a microscope it appears as:
a) a spherical helix with equidistant-curve spacing in a generally spherical body,
b) concentric (i.e. successively placed inside another) spherical helices with equidistant-curve spacing in a generally spherical body, or
c) concentric circles with equidistant-curve spacing in a generally spherical body,
and the separation distance between curves is about half the pitch of the helical structure of a chiral nematic, liquid crystal.

In embodiments of the present invention, it is the microencapsulation of a chiral nematic, liquid crystal body inside a generally spherical polymer shell that enforces a spherulite morphology on the superstructure of the liquid crystal body.Strong scattering of incident light in a chiral nematic, liquid crystal body in the light scattering state is created by:
a) the spherulite morphology, and
b) using a helical pitch length from a range bounded by an upper and lower limit.

In light scattering chiral nematic liquid crystal embodiments of the invention, chiral dopant can be a single compound, or a mixture. Preferably more than one chiral dopant is used. Preferably at least one chiral dopant has a Helical Twisting Power (HTP) magnitude > 20, more preferably > 30. Preferably another chiral dopant has an HTP of < 20.

To maximize light scattering in the light scattering state, the helical pitch length lower limit determined at least in part by the chiral dopant is preferably > 1 micron, and more preferably > 1.5 microns, and the helical pitch length upper limit is ≤ 0.5 times the diameter of a liquid crystal body, more preferably ≤ 0.333 times the diameter, and most preferably ≤ 0.2 times the diameter.

To maximize light absorbing in the light absorbing state the helical-pitch-length's lower limit is preferably > (0.74 microns / extraordinary refractive index of the liquid crystal) and is about half or less the corresponding pitch for light scattering embodiments.

Incident light rays on a liquid crystal body that are not directed along a radial, follow a spatially curved path through the spherulite morphology that is the summation of interactions with liquid crystal helices that are themselves spatially curved.

The present invention provides for intermediate states where the applied electrical field/voltage to an electro-optical layer is intermediate a zero applied field (corresponding to the light scattering/absorbing state) and a maximum applied field (corresponding to the transparent state).

Preferably in embodiments, a microencapsulated chiral nematic, liquid crystal body is free of polymer network, or polymer fractions, or solubilized additives that could induce a polydomain / focal conic texture (as is known from the prior art and discussed earlier).

In embodiments the discrete bodies of chiral nematic, liquid crystal are microencapsulated by polymer shells having a densely-crosslinked, polymer-network structure.

Embodiments favoring low angular haze comprise a monolayer of spherical liquid crystal bodies, and preferably the diameters of liquid crystal bodies fall within a narrow range up to the thickness of the electro-optical layer.

### Brief Description of the Drawings

Embodiments of the invention will now be described, by way of example, with reference to the accompanying drawings, in which:
Figure 1 is a rendering of a chiral nematic, liquid crystal body in the light scattering state: it shows the lamellar-like structure of helices twisted in the form of a spherical helix with equidistant-curve spacing in a spherical body as it appears when viewed between crossed polarizers.
Figure 2 is similar to figure 1 except it shows two concentric, spherical helices with equidistant-curve spacing in a spherical body.
Figure 3 is a rendering of the chiral nematic, liquid crystal body in the light scattering state: it shows the lamellar-like structure of helices twisted in the form of concentric circles with equidistant-curve spacing in a spherical body as it appears when viewed between crossed polarizers.
Figure 4 is a schematic of the helical arrangement of the director in chiral nematic, liquid crystal and how this creates a lamellar-like structure of helices comprising alternating refractive indices.
Figure 5 shows a cross section of a chiral nematic, liquid crystal body through its centre and parallel to a viewing face in the spherulite morphology of the light scattering state.
Figure 6 represents the liquid crystal helical structures shown in figure 5 by the corresponding lamellar-like structure.
Figure 7 is similar to figure 4 except it also shows dichroic dye molecules generally aligning with the liquid crystal director as it twists in a helix in dichroic dye doped, chiral nematic liquid crystal.
Figure 8 shows a cross section of a dichroic dye doped, chiral nematic, liquid crystal body through its centre and perpendicular to a viewing face in the spherulite morphobgy of the light absorbing state.
Figure 9 shows a cross section of a chiral nematic, liquid crystal body through its centre and perpendicular to a viewing face in the transparent state.
Figure 10 shows a cross section of a dichroic dye doped, chiral nematic, liquid crystal body through its centre and perpendicular to a viewing face in the transparent state.
Figure 11 is a cross sectional view showing a chiral nematic, liquid crystal display device having an electro-optical layer of spherical shells dispersed in a polymer matrix (synonymous with binder).
Figure 12 is a cross sectional view of a colour display device having a colour patterned, electro-optical layer comprising dichroic-dye-doped, chiral nematic, liquid crystal.
Figure 13 is a cross section of a smart window incorporating a switchable film device having an electro-optical layer comprising a monolayer of spherical chiral nematic, liquid crystal bodies.
Figure 14 is a cross sectional view of a reflective, chiral nematic, liquid crystal, display device in an electrically field aligned state and corresponds with a black optical state.

### Detailed Description of the Invention

The present invention relates to chiral nematic, liquid crystal devices, also known as cholesteric liquid crystal devices. The invention also relates to dichroic dye (synonymous with pleochroic dye) doped chiral nematic, liquid crystal devices, also known as phase change, guest-host (PCGH) devices. In embodiments, dichroic dye is solubilized in chiral nematic, liquid crystal thereby converting its light scattering state into a light absorbing state.

In embodiments of the present invention the transparent state (synonymous with the ON state) minimizes any increase in haze with increasing viewing angle to a display's normal by minimizing the interface area between discrete liquid crystal bodies and the surrounding polymer matrix phase (i.e. the source of such haze). The interface area is minimized by:
a) allowing the mean volume of discrete, liquid crystal bodies to be maximized, and generally avoiding an upper limit on the mean; and
b) using generally spherical liquid crystal bodies in the electro-optical layer. Of all the geometric forms having a given volume, the sphere is the one with the smallest surface area and consequently minimizes haze with respect to other geometric forms.

In relation to point a), it is possible to avoid an upper limit on the mean of liquid crystal bodies because in the present invention neither the light scattering/absorbing state nor the transparent state imposes an upper limit; the mean diameter of discrete, liquid crystal bodies can be up to the thickness of a display's electro-optical layer. In relation to point b, a spherical liquid crystal body optimizes the light scattering/absorbing state of the present invention as discussed in following sections.

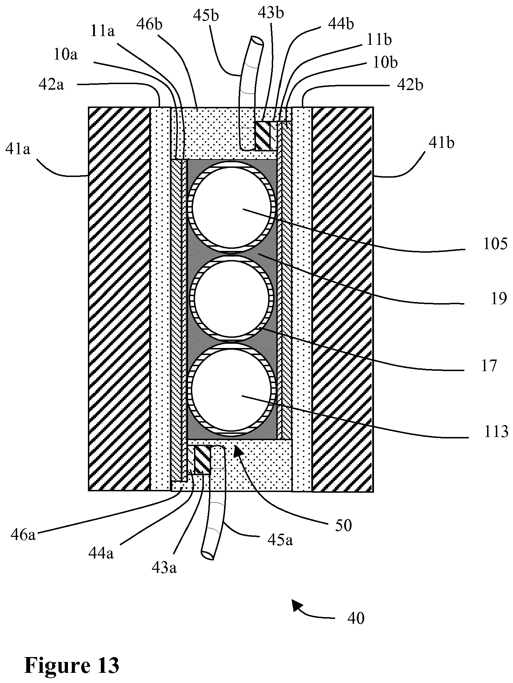

Consequently, the optimum embodiment to minimize haze in the transparent state comprises a monolayer of spherical liquid crystal bodies, and preferably the diameters of liquid crystal bodies fall within a narrow range up to the thickness of the electro-optical layer, see chiral nematic, liquid crystal film 50 in figure 13. By contrast, the prior art favors an irregular geometric form (e.g., polygonal) for liquid crystal bodies in the light scattering, polydomain state as this optimizes the stabilization of multiple domains. It also requires liquid crystal bodies to be stacked as the thickness of the electro-optical layer is a multiple of the length of a major axis of a liquid crystal body.

In the present invention the light scattering/absorbing state is an ordered, liquid crystal texture, and because it is ordered it is readily stable over time and insensitive to size/volume. It replaces the limiting polydomain / focal conic texture of prior art cholesteric, liquid crystal devices, and does not compromise the transparent state. Its light scattering efficiency is equivalent to, or exceeds, that available from the prior art devices having a light scattering, polydomain / focal conic texture.

A cholesteric, liquid crystal device of the present invention comprises discrete bodies (synonymous with volumes) of chiral nematic, liquid crystal, or dichroic-dye doped, chiral nematic, liquid crystal, arranged in an electro-optical layer, said bodies of liquid crystal are selectively operable in at least two states, namely, a first state that transmits light through a liquid crystal body and a second state that scatters or absorbs light in a liquid crystal body, said discrete bodies are microencapsulated by a polymer shell (synonymous with capsule) and are spheroidal, preferably spherical, said light scattering/absorbing state has an ordered liquid crystal texture that minimizes disclinations or domains within a liquid crystal body, and said light scattering/absorbing state's liquid crystal texture is a superstructure comprising helices of chiral nematic, liquid crystal arranged with a spherulite morphology.

In said superstructure having a spherulite morphology, helices of chiral nematic, liquid crystal are arranged in a lamellar-like structure, and said lamellar-like structure of helices has curvature (i.e. it is not planar) and forms a generally concentric, equidistant-curve pattern within a generally spherical body.

Preferably in embodiments a liquid crystal body has either a predominantly light scattering state or a predominantly light absorbing state. In the predominantly light scattering state a liquid crystal body has little or no added dichroic dye while in a predominantly light absorbing state a liquid crystal body has significant dichroic dye solubilized (i.e. doped) in its chiral nematic, liquid crystal.

The texture of the light scattering/absorbing state in a generally spherical liquid crystal body is sufficiently ordered that any disclinations or domains present within a liquid crystal body have a negligible bearing on (i.e. are not significant to) the optical properties of the state. In embodiments the liquid crystal texture of the light scattering/absorbing state has just one disclination line (synonymous with defect line), and this arises because, as is known, it is not possible to order liquid crystal molecules within a spherical body without creating one or more defects in the director field. In embodiments the disclination line in a liquid crystal body is a radial or a diametrical line, the former corresponds to defect points along the line of strength 2 while the latter corresponds to defect points of strength 1 (see section "Defects in Liquid Crystal" in "Liquid Crystals Nature's Delicate Phase Of Matter" by Peter J. Collins for general background information). Accepting this one disclination line, the liquid crystal texture of the light scattering/absorbing state in a generally spherical body approximates a single domain and is ordered. By contrast, the prior art's light scattering, polydomain state has multiple disclinations arising from its multiple domains; the disclinations are at the interfaces between neighboring domains, and light is heavily scattered at such disclinations or interfaces due to the disorder between (or divergent alignment of) neighboring domains causing a refractive index difference between neighboring domains (see PCT/EP2008/005151 for more information on the light scattering of the polydomain state in the prior art).

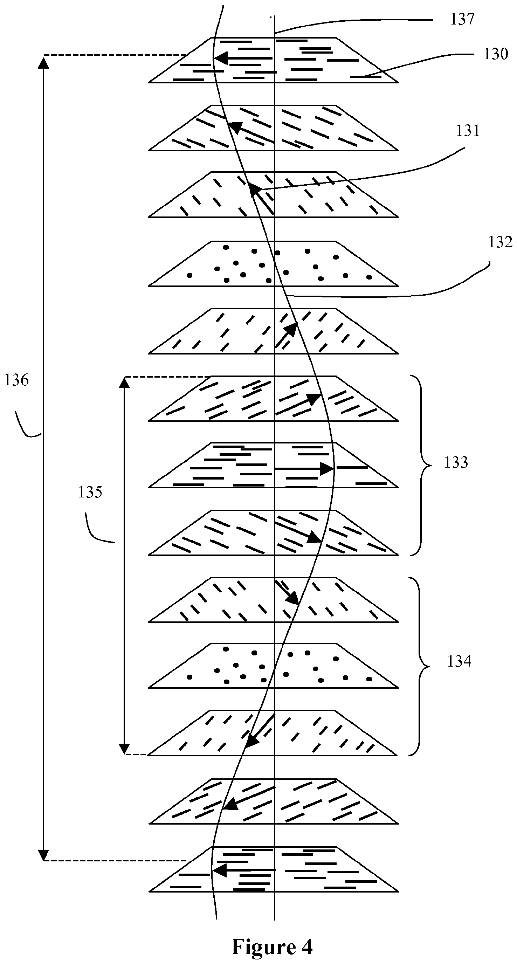

In the present invention the light scattering/absorbing state's liquid crystal texture has a superstructure in that it has a structure built on the helical structure of chiral nematic, liquid crystal (a helix 132 in figure 4 describes the twisting of the liquid crystal director 131 and molecules 130), and the superstructure arranges the helices in a lamellar-like structure. The lamellar-like structure, when viewed perpendicular to the helical axis (see 137 in figure 4), can be thought of as comprising (or simplified to comprise) two lamellae, each having a different refractive index and thickness: a first lamella (see 134 in figure 4) has a minimum refractive index corresponding to a liquid crystal's ordinary refractive index and is averaged over adjacent liquid crystal director regions as indicated in figure 4, and a second lamella (see 133 in figure 4) has a maximum refractive index corresponding to a liquid crystal's extraordinary index and is also averaged over adjacent liquid crystal director regions. Generally lamella 134 is thicker than lamella 133. The period of the laminar-like structure (135 in figure 4) is half the pitch of the helical structure (136 in figure 4) of chiral nematic, liquid crystal.

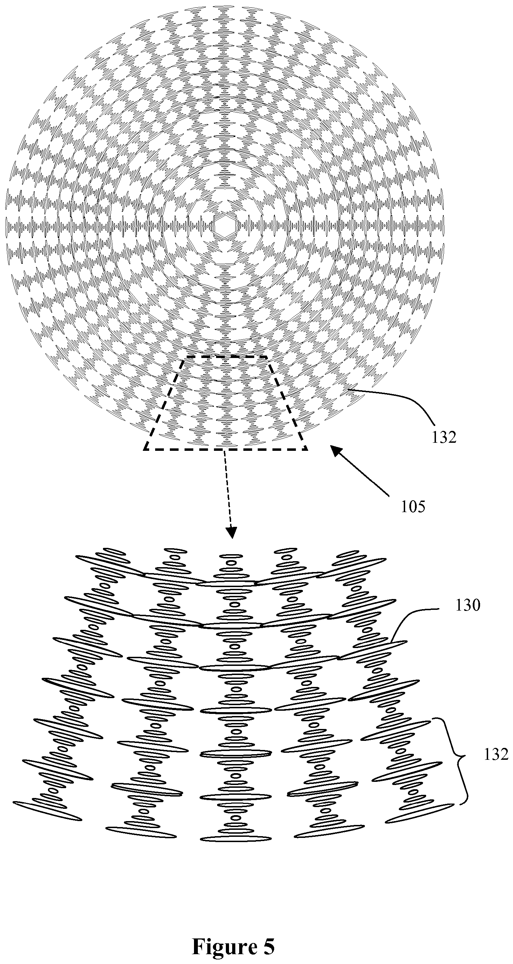

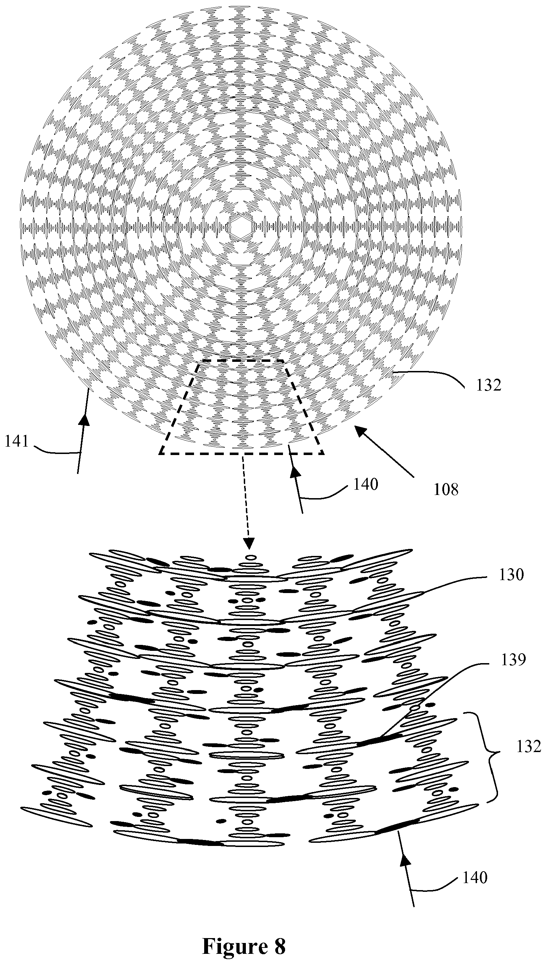

In embodiments the lamellar-like structure of helical axes is visible between crossed polarizers under a microscope (e.g., at a magnification of 1,000 times). In the prior art the lamellar-like structure of chiral nematic, liquid crystal is demonstrated by the so-called fingerprint texture apparent between crossed polarizers when the helical axis is aligned parallel to a substrate (or perpendicular to the viewing direction). Note, in the present invention the helical axis alignment is the opposite of the fingerprint texture observed in the prior art - preferably the helical axis is aligned perpendicular to a shell's surface as shown in figures 5 and 8.

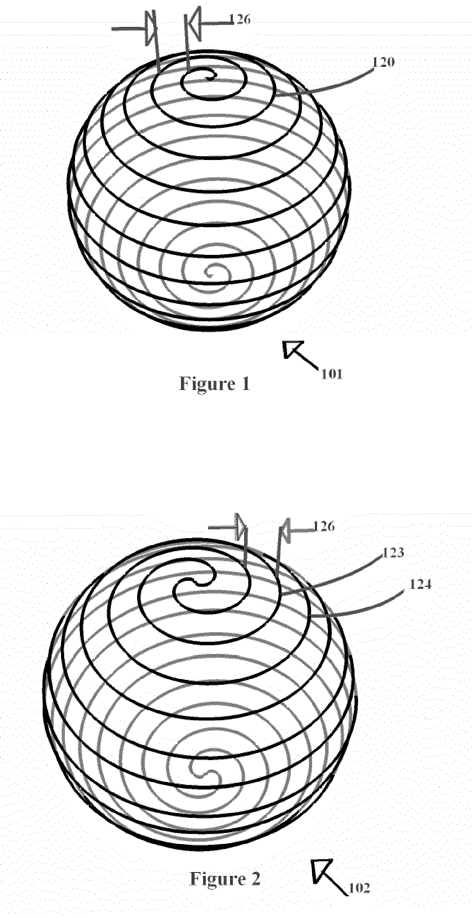

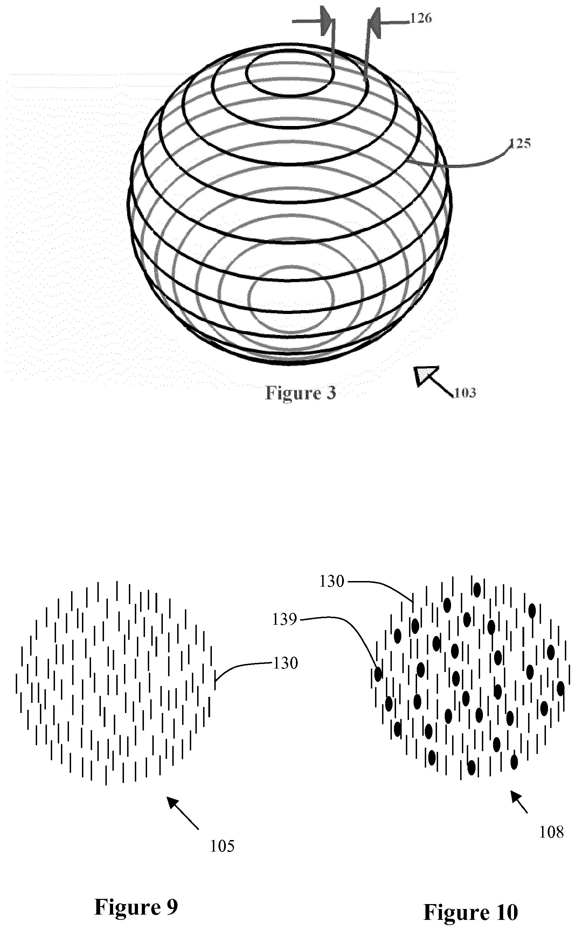

In embodiments the lamellar-like structure within a superstructure twists so that it has curvature. Twisting is periodic, and when a superstructure is viewed between crossed polarizers under a microscope it appears as:
a) a spherical helix with equidistant-curve spacing in a generally spherical body, see curve 120 of liquid crystal body 101 in figure 1;
b) concentric (i.e. successively placed inside another) spherical helices with equidistant-curve spacing in a generally spherical body, see figure 2, two concentric curves, 123 and 124, are shown in liquid crystal body 102; or
c) concentric circles with equidistant-curve spacing in a generally spherical body, see curve 125 in liquid crystal body 103 in figure 3.

It will be appreciated that if a liquid crystal body is a spheroid rather than a sphere then these forms will twist with such curvature (i.e. take on the curvature of the microencapsulating shell/capsule). Any defects in the curvature of a shell wall at the interface with the microencapsulated liquid crystal that are of a scale/dimension similar to the helical pitch will result in disturbance of the curve pattern locally. A disclination point or line creates a defect in the curvature, however as mentioned, there is generally just a single disclination line in a spherical liquid crystal body in the present invention's light scattering/absorbing state.

The separation distance between curves (or the radial displacement of a turn, or the period) of the pattern is shown as dimension 126 in figures 1 to 3 and is about half the pitch of the helical structure of a chiral nematic, liquid crystal. The equidistant-curve pattern is concentric in that a projection of the curve pattern onto a flat surface would show curves progressing successively inside each other and having a common center or axis. When a superstructure is viewed between crossed polarizers under a microscope, extinctions (i.e. black areas) occur when the liquid crystal director is parallel to either of the axes of the crossed polarizers. Two types of extinctions can be seen:
a) extinctions along the polarization axes of the polarizers due to circular birefringence, if the extinction is a cross-like pattern it is called a Maltese Cross; and
b) extinctions due to the periodic twisting of the lamellar-like structure.

In the figures only the second type of extinctions (i.e. due to periodic twisting of the lamellar-like structure) are shown.

In embodiments of the present invention, it is the microencapsulation of a chiral nematic, liquid crystal body inside a generally spherical polymer shell that enforces a spherulite morphology (see liquid crystal body 105 in figure 5) on the superstructure of a liquid crystal body. This is because liquid crystal molecules align to the inside wall of a shell with either parallel (synonymous with planar) or perpendicular (synonymous with homeotropic) alignment, and preferably with parallel alignment, and so alignment of liquid crystal molecules grows from the outside inward enforcing a generally spherical alignment of liquid crystal molecules (the exception being defect points arising from the packing of a 'layer' of liquid crystal molecules on a spherical surface as discussed earlier).

By contrast, in the prior art a discrete liquid crystal body has generally planar interface surfaces arising from a generally polygonal shape in a polymer matrix, and these planar faces influence adjacent liquid crystal molecules to align to the polymer interface surface enforcing a planar alignment of liquid crystal molecules in that region of a liquid crystal body, and when planar aligned liquid crystal molecules originating from one planar interface surface impinge on those originating from another planar interface surface at a different angle, a disclination occurs along the interface between the two as discussed earlier for the polydomain state. Clearly the conditions necessary to create a stable polydomain / focal conic texture cannot create a spherulite morphology.

There are some analogies between the spherulite morphology of liquid crystal bodies of the present invention and the spherulite morphology of polymers crystallized from melt or concentrated solutions. In embodiments, the generally concentric, equidistant-curve pattern of the lamellar-like structure within a generally spherical body (when observed between cross polarizers) is analogous to the "ringing" or "banding" observed with some polymer spherulites and said to arise (in polymer spherulites) from the helical twisting of lamellae in a radial direction. In this regard, in embodiments, a liquid crystal body has a spherulite morphology in which its lamellar-like structure twists in a helical manner in a radial direction.

The analogy with polymer spherulites extends to negative spherulites and positive spherulites. Negative polymer spherulites have the lowest refractive index in a radial direction and are analogous to the helical axis being aligned in a radial direction in a chiral nematic, liquid crystal body (as shown in figure 5), and positive polymer spherulites have the highest refractive index in a radial direction and are analogous to the helical axis being aligned perpendicular to a radial direction in a chiral nematic, liquid crystal body. In embodiments, a negative, spherulite morphology for a liquid crystal body in the light scattering/absorbing state is preferred.

However, the analogy between the spherulite morphology of liquid crystal bodies of the present invention and the spherulite morphology of polymers crystallized from melt or concentrated solutions do not extend to the growth of a spherulite morphology. In the present invention the spherulite morphology grows from the outside in taking on an alignment to the spherical inner wall of a microencapsulating shell, whereas in a polymer spherulite, the spherulite morphology grows from the inside out originating from a seed / nucleation site and merely stops growing when it impinges on a surface (its 'rings' do not align to a surface it impinges on).

In embodiments of the present invention, strong scattering of incident light in a chiral nematic, liquid crystal body in the light scattering state is created by:
a) the spherulite morphology, and
b) using a helical pitch length from a range bounded by an upper and lower limit.

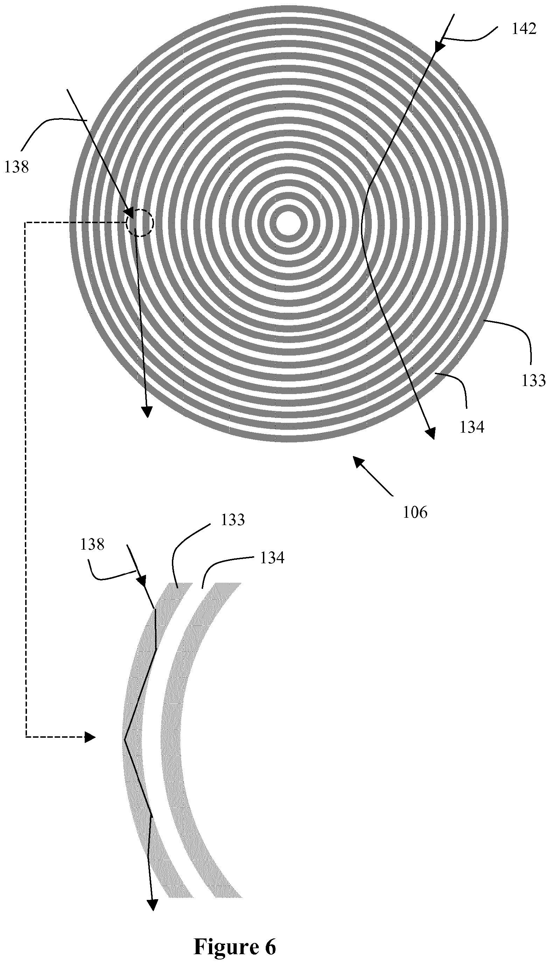

Figure 5 shows a cross section of a liquid crystal body 105 through its centre and parallel to a viewing face in the spherulite morphology of the light scattering state; light falling on a viewing face of a display device with such a liquid crystal body makes an angle to the plane of the page. The cross section through the spherulite morphology in figure 5 can be thought of as concentric 'lamellae shells' having an alternating refractive index and an alternating 'shell' thickness, and in this regard would appear as shown in figure 6. Lamella 133 from figure 4 gives the refractive index and thickness of a first 'lamella shell' and lamella 134 from figure 4 gives the refractive index and thickness of a second 'lamella shell'; see figure 6. In embodiments the thickness of these lamella are on the same scale as the wavelength of visible light and are varied in proportion to the helical pitch (the period 135 of the lamellar-like structure is half the helical pitch 136, see figure 4). To maximize light scattering in the light scattering state the thickness of a lamella (133 or 134 in figures 4 and 6) is preferable ≥ 0.56 micron (i.e. the centre of the visible range) and more preferably ≥ 0.74 micron (i.e. outside the visible range). Expressed in terms of the helical pitch, to maximize light scattering in the light scattering state the helical pitch is preferably > 1 micron, and more preferably > 1.5 microns.

Light scattering in the concentric 'lamellae shells' of the spherulite morphology is complex. It comprises light reflection and light transmission (with refracted angle) at the quasi interface between 'lamellae shells', and also light diffraction and dispersion. Incident light rays that do not propagate along a radial see 'lamellae shells' for at least part of the distance travelled in a liquid crystal body. This can be visualized by imagining incident light rays that are perpendicular to the plane of the page when looking at figures 5 and 6. Such perpendicular light rays will encounter the refractive index of liquid crystal molecules varying between nₒ and nₑ as a helix twists for at least a short distance within a liquid crystal body. An incident light ray that makes an angle to the plane of the page can be treated similarly by taking a section through the centre of a liquid crystal body at right angles to the incident ray; in such a section/plane a light ray will again encounter the refractive index of liquid crystal molecules varying between nₒ and nₑ. In theory only those incident light rays that propagate along a radial would not encounter 'lamellae shells' and would see a uniform refractive index of about the liquid crystal's extraordinary index. But such radial rays encounter a defect point (see earlier discussion of disclination lines) at a liquid crystal's centre and are scattered.

In the prior art Mie scattering (also known as the Mie solution to Maxwell's equations) describes the scattering of light by an amorphous sphere when the dimensions under consideration are similar to the wavelength of light. Others have extended Mie scattering to concentric 'amorphous shells' having different refractive indices and such models could be applied to embodiments of the present invention to model light scattering, though tie radial, helical-twisting shown in figure 5 adds an optically active dimension to a concentric 'lamella shell' treatment (i.e. a "lamella shell' is optically active).

A phenomenon thought to be a contributor to the light scattering efficiency of chiral nematic, liquid crystal bodies of the present invention is 'total internal reflection'. In figure 6 a light ray 138, incident at an angle to the plane of the page, undergoes 'total internal reflection' in a high refractive index concentric 'lamella shell' for a short distance within a liquid crystal body until the curvature (or birefringence variation) causes the light ray to be transmitted into an outer, lower index 'lamella shell' (i.e. as the critical angle for incident light is no longer exceeded). Reflection and transmission (with refraction angle) of light ray 138 by other lamelle in figure 6 is not shown. As an example of 'total internal reflection', if a liquid crystal's ordinary refractive index nₒ = 1.5 (the lower index 'lamella shell') and extraordinary refractive index nₑ = 1.7 (the higher index lamella shell) then 'total internal reflection' occurs at a critical angle of > 61.9 degrees to the normal to a surface. In embodiments a liquid crystal body has multiple such concentric 'lamellae shells' thereby making the 'total internal reflection' phenomenon just described more significant. This then leads to an upper limit for the helical pitch length of a chiral nematic, liquid crystal in the light scattering state's spherulite morphology: to maximize the number of concentric 'lamellae shells', and hence the contribution of 'total internal reflection' to the light scattering efficiency of the light scattering state, the pitch is ≤ 0.5 times the diameter of a liquid crystal body, more preferably ≤ 0.333 times the diameter, and most preferably ≤ 0.2 times the diameter.

As is known, the addition of chiral dopant(s) to nematic liquid crystal creates chiral nematic liquid crystal with the helical pitch being proportional to the ratio of chiral dopant to nematic liquid crystal. The chiral dopant can be a single compound, or a mixture. Preferably more than one chiral dopant is used; preferably at least one chiral dopant has a Helical Twisting Power (HTP) magnitude > 20, more preferably > 30; and preferably another chiral dopant has an HTP of < 20. Chiral dopant, nematic liquid crystal and dichroic dye compounds are available from numerous liquid crystal suppliers including Merck GmbH and Chisso Corporation (JP).

The explanation offered for the strong light scattering of the spherulite morphology of the present invention has been a simplified one based on a lamellar-like structure having an abrupt/step change in refractive index from one lamella to the next. The lamella-like structure offers an explanation for the upper and lower limits for the helical pitch length given earlier and proven in trials by the applicant to maximize light scattering in the spherulite morphology of the light scattering state. Further support for a lamellar-like structure is the concentric, extinction curves visible between crossed polarizers under a microscope when viewing the spherulite morphology of the light scattering state.

An alternative explanation of the strong light scattering in the spherulite morphology of the present invention is that an incident light ray on a chiral nematic liquid crystal helix is transmitted with a refraction angle if the ray makes an angle to the helical axis, and as neighboring helices are spatially curved the transmitted light ray follows a curved path (see incident light ray 142 in figure 6). In embodiments of the present invention all incident light rays on a liquid crystal body that are not directed along a radial follow a spatially curved path through the spherulite morphology that is the summation of interactions with liquid crystal helices that are themselves spatially curved. The curved paths followed by rays on exiting a liquid crystal body vary spatially significantly and cause the strong light scattering in the spherulite morphology.

An analogous phenomenon of a curved light path through a medium having spatially and continuously varying refractive index is found in Kevin Brown's book 'From Reflections on Relativity'. In figure 2 of the chapter 'Refractions on Relativity' light rays in a medium where the index of refraction is spherically symmetrical and drops off linearly and continuously with distance from the center gives ray paths that are spatially curved in the form of hypocycloidal loops. The light paths were mathematically modeled based on an Schwarzschild Metrix solution. The analogy with the spherulite morphology is strong. In embodiments of the present invention a liquid crystal body is spherical and its index of refraction is generally spherically symmetrical (see figure 5 for example) and varies continuously along a radial when the axes of the chiral nematic, liquid crystal's helices are aligned along radials.

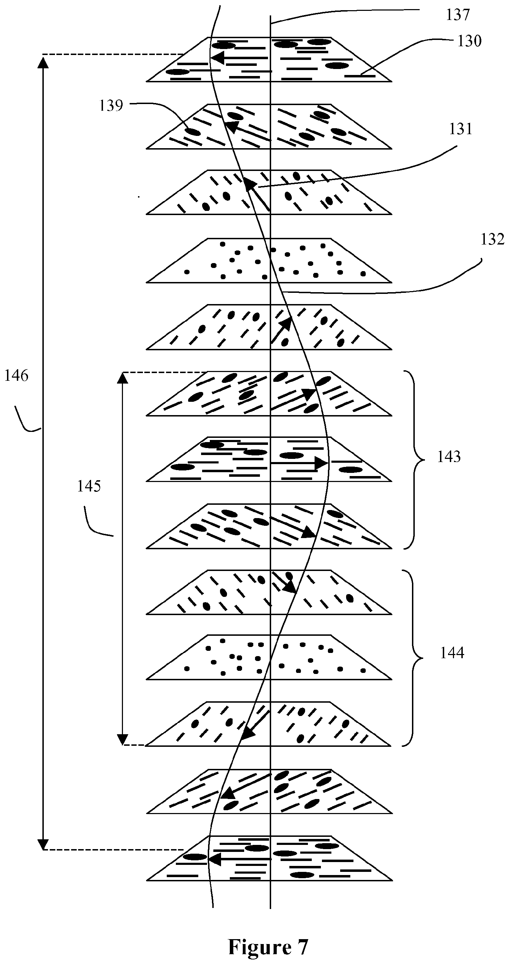

The light absorbing state of the present invention is similar to the light scattering state just described. The differences are the doping of the chiral nematic, liquid crystal with dichroic dye, and using a helical pitch length that is significantly shorter than the corresponding light scattering state. In embodiments several dichroic dyes can be solubilized in the liquid crystal phase to achieve a specific color, or to achieve black. The latter is particularly attractive for window applications as, at a minimum, no light is transmitted. The dichroic dye within a liquid crystal body adsorbs visible light (e.g., sunlight). Figure 7 is similar to figure 4 except it also shows dichroic dye molecules 139 (the lamellae 143 and 144 are equivalent to figure 4's 133 and 134, and the lamellar-like structure period 145 is equivalent to 135). The dichroic dye molecules 139 are anisotropic and generally align with the liquid crystal director 131 as it twists to describe a helix 132. The light absorbing state of the present invention is opaque, assuming adequate electro-optical layer thickness, because light absorbing by dichroic dye molecules combines favorably with light scattering by chiral nematic, liquid crystal molecules in the spherulite morphology.

Within a dichroic dye doped, liquid crystal body, light absorption is a maximum when the propagating direction of an incident light ray is along a chiral nematic, liquid crystal's helical axis (parallel to axis 137 in figure 7). Incident light is absorbed in all directions of its electric field as a ray travels one quarter of a helix (corresponds to orthogonal orientations of the long axis of a dye molecule). It will be appreciated that as the angle between a helix's axis and an incident light ray increases the absorbing efficiency of the dye molecules reduces. Light absorption is a minimum when the propagating direction of an incident light ray is perpendicular to a chiral nematic, liquid crystal's helical axis (perpendicular to axis 137 in figure 7). In this case the electric field resolved along a dye molecule's long axis is absorbed while the electric field resolved along an orthogonal axis is not (i.e. linearly polarized light is transmitted).

In figure 8 a cross section of a dichroic dye doped, liquid crystal body through its centre and perpendicular (i.e. a different perspective to figure 5) to a viewing face in the light absorbing state shows dichroic dye molecules 139 in the spherulite morphology. Light falling on a viewing face of a display device with such a liquid crystal body is in the plane of the page of figure 8. An incident light ray 140 that is generally directed towards a liquid crystal body's center will travel generally along a radially arranged helical axis and so will be strongly absorbed by dye molecules. However, for a ray such as 141 shown in figure 8 light absorbing is more complex as it travels through the 'lamellae shells' (as discussed earlier for the light scattering state). It will be appreciated from figure 8 that parallel alignment (synonymous with planar) of dye molecules with a liquid crystal body's outer surface favors strong light absorption in a short distance from the outer surface, thought light absorption continues for as long as a light ray propagates in a dichroic dye doped, liquid crystal body.

It has been found that in light absorbing embodiments (i.e. having dichroic dye doped, chiral nematic liquid crystal) light absorption is maximized by having a helical pitch length (146 in figure 7) significantly shorter than in light scattering embodiments (i.e. not dye doped). A minimum helical pitch in light absorbing embodiments is preferably sufficiently long that the light absorbing state is free of Bragg reflection of visible light and Bragg reflects, if any, in the infra-red region. In this regard the pitch length in light absorbing embodiments is > (0.74 microns / extraordinary refractive index of the liquid crystal). As is known, the Bragg reflection band is from wavelength λ = n₀p to nₑp where n₀ is a liquid crystal's ordinary refractive index, nₑ is the extraordinary refractive index, and p is the pitch of the helix. For example, if the extraordinary refractive index is 1.7 then the pitch is > (0.74 microns / 1.7) or 0.435 microns. In light absorbing embodiments the helical pitch is preferably about half or less the corresponding pitch for light scattering embodiments.

In the transparent state of the present invention liquid crystal molecules align parallel or perpendicular to an applied electrical field depending on whether the dielectric anisotropy of the liquid crystal is > 0 or < 0. Preferably in embodiments the chiral nematic, liquid crystal has a positive dielectric anisotropy. Figure 9 shows a cross section of a chiral nematic, liquid crystal body 105 (dielectric anisotropy > 0) through its centre and perpendicular to a viewing face in the transparent state (the electrical signal and the electrodes are not shown) The helical structure of chiral nematic, liquid crystal completely unwinds and the spherulite morphology of the light scattering state disappears. An incident light ray encounters a uniform refractive index in a liquid crystal body in the transparent state for a given incident angle. Light incident perpendicular to a display's face will encounter a refractive index equal to the liquid crystal's ordinary refractive index. In embodiments, to minimize haze in the transparent state, a liquid crystal body is encapsulated with a polymer wall whose refractive index matches (preferably to within 0.01, and more preferably to within 0.002) the liquid crystal's ordinary refractive index, and in turn matches the surrounding polymer matrix in an electro-optical layer.

Figure 10 shows a cross section of a dichroic dye doped, chiral nematic, liquid crystal body 108 through its centre and perpendicular to a viewing face in the transparent state It is similar to figure 9 with the exception that the added dichroic dye molecules 139 align with the liquid crystal molecules 130 and parallel to the applied electrical field. Advantageously, dichroic dye in liquid crystal bodies is effective in further reducing a viewer's perception of haze in the transparent state for viewing angles to the face of a display/ smart window from 10 to 90 degrees.

The present invention also provides for intermediate states where the applied electrical field/voltage to an electro-optical layer is intermediate a zero applied field (corresponding to the light scattering/absorbing state as previously described) and a maximum applied field (corresponding to the transparent state as previously described). In an intermediate state, as an applied electrical field/voltage increases, the helical pitch increases causing the number of concentric 'lamellae shells' to reduce and the scattering/absorbing efficiency to reduce. As an intermediate state approaches the transparent state a liquid crystal body can have an outer region generally aligned parallel to the electrical field and a core region that still has helical structures. In this regard it is thought that the spherulite morphology may reduce in volume to a core within a liquid crystal body as the transparent state approaches.

In preferred embodiments the discrete bodies of chiral nematic, liquid crystal are microencapsulated inside polymer shells (synonymous with capsules), the reason is that in general microencapsulation processes create shells having a spherical cavity for the microencapsulated electro-optical fluid. The techniques of microencapsulation were discussed earlier in the background. In the prior art shells are not mechanically robust and their shape distorts in the subsequent process steps necessary to form an electro-optical layer of shells. In addition, the distorting of the shape of shells to be more polygonal than spherical in an electro-optical layer is generally desirable in the prior art.

Most favourably, co-pending PCT application entitled "A Method For Microencapsulating Electro-Optical Fluid" (Attorney Ref: P103105PC00) discloses an improved technique for the microencapsulation of electro-optical fluid (i.e. chiral nematic, liquid crystal) inside hydrophobic polymer shells: the polymer wall of shells have a densely-crosslinked, polymer-network structure that provides shells with strong chemical resistance (e.g. to the polymer precursors used in an electro-optical ink), and the technique disclosed ensures that despite the use of densely-crosslinked, polymer network structure, shells are mechanically robust (i.e., shells are not brittle) and preserve their spherical shape when dispersed in an electronic ink, printed onto a substrate, and cured in the polymer matrix of an electro-optical layer. While the latter hydrophobic-shell technique of microencapsulation is preferred, any known technique, whether for hydrophilic shells or hydrophobic shells, can be used in embodiments of the current invention provided that the liquid crystal bodies in the resulting electro-optical layer are spheroidal and preferably spherical. Preferably in embodiments a microencapsulated chiral nematic, liquid crystal body is free of polymer network, or polymer fractions, or solubilized additives that could induce a polydomain / focal conic texture (as is known from the prior art and discussed earlier).

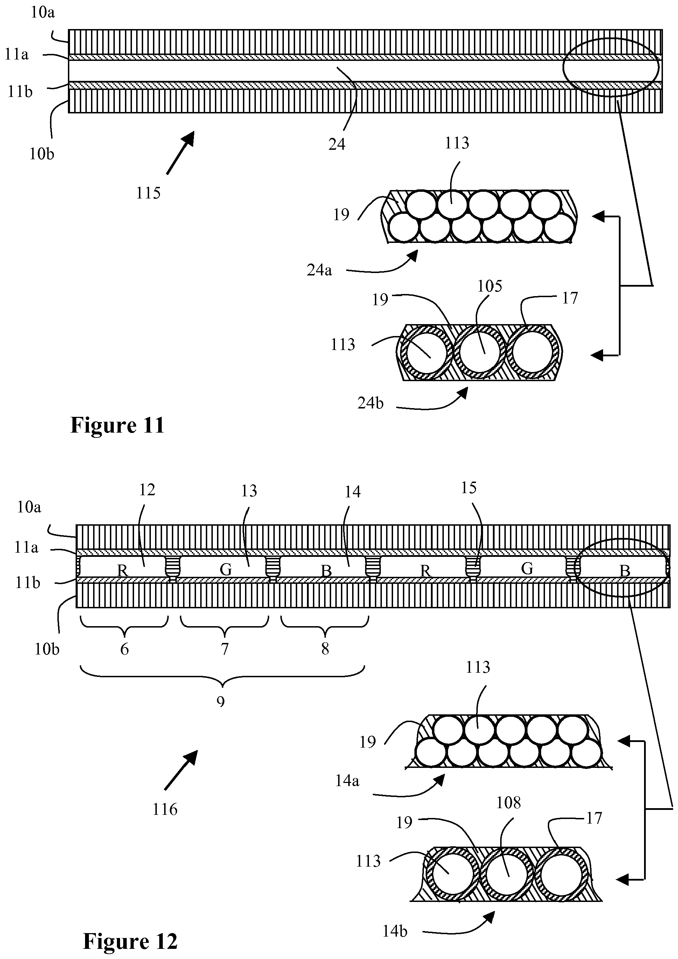

Figure 11 is a cross sectional view showing an embodiment of a chiral nematic, liquid crystal display device 115 having an electro-optical layer 24 of shells 113 (comprising spherical liquid crystal bodies 105 microencapsulated by polymer wall 17) dispersed in a polymer matrix 19 (synonymous with binder). Dichroic-dye-doped, chiral nematic liquid crystal embodiments are similar. Shells 113 can be dispersed as a monolayer, 24b, or a stacked layer, 24a. Electrodes 11a and 11b are made from indium tin oxide (ITO) or other suitable optically-clear, conductive material. One or both electrodes can be patterned to create a segmented display device or a matrix of pixels (i.e., picture elements), or alternatively, neither electrode is patterned in switchable film applications an example of which is shown in figure 13. Advantageously, one or both substrates 10a and 10b are a transparent, flexible plastic film such as polyethylene terephthalate (PET) or polycarbonate (PC), however substrates 10a and 10b can also be a rigid material such as glass. It will be appreciated that electrodes 11a and 11b need not be in direct contact with the electro-optical layer 24, but can be coupled to the layer through for example, a dielectric layer (not shown). It is sufficient that an electrical field between the electrodes provides the necessary field strength to control an electro-optical layer.

When a suitably large electrical field is applied between electrode 11a and the counter electrode 11b (in figure 11) the area of electro-optical layer 24 overlapped by both changes from a light scattering state (i.e. spherulite morphology) to the transparent state (electrical connections and signal generator are not shown).

In active matrix applications one of the substrates may be glass and the active matrix transistors and pixel electrodes would be formed on the glass (thought the active matrix transistors and pixel electrodes may also be formed on a plastic film). In addition, electrode 11 a (the continuous electrode) is overlaid with a black mask or matrix (not shown in the figures but typically an organic material with carbon black particles) that hides the dead region between the electrodes of pixels, as will be familiar from the prior art.

Figure 12 is a cross sectional view of an embodiment of a color display device 116 having a color patterned, electro-optical layer comprising dichroic-dye-doped, chiral nematic, liquid crystal bodies 108. Advantageously such an embodiment eliminates the separate color filter of prior art color devices and is described in greater detail in co-pending PCT application entitled "A Method For Microencapsulating Electro-Optical Fluid" (Attorney Ref: P103105PC00). Rather than being a continuous layer as in figure 11, the electro-optical layer is divided into discrete regions corresponding to color subpixels (6, 7, and 8), and optical adhesive 15 fills inter-regions in the electro-optical layer. Subpixel regions cooperate to form a pixel 9, for example, a red region (12), a green region (13) and a blue region (14). The color in a subpixel comes from the dichroid dyes solubilized in the region's chiral nematic, liquid crystal shells, hence a blue subpixel has shells incorporating blue-color-creating dichroic dye(s) whereas a red subpixel has different shells (those incorporating red dye(s)). Blue region 14 is shown in greater detail as 14a and 14b. Depending on the ratio of the average shell diameter to the print thickness, and the relative volume occupied by shells in a print, the shells may be stacked, 14a, or be a monolayer, 14b. Display device 116 requires three different color inks, one for each type of dichroic-dye-doped, chiral nematic, liquid crystal shell, and a method to screen-print the inks to form the color display device shown in figure 12 is described in co-pending PCT application entitled "A Method For Microencapsulating Electro-Optical Fluid" (Attorney Ref: P103105PC00).

Figure 13 shows an embodiment of a smart window 40 comprising chiral nematic, liquid crystal film 50 laminated between glass panes 41a and 41b. Film 50 is similar to device 115 in figure 11. The electro-optical layer shown is a monolayer of shells 113, the liquid crystal bodies 105 are spherical and their diameters fall within a narrow range up to the thickness of the electro-optical layer. On opposing substrates 10a and 10b connection ledges are prepared: copper or other highly conductive flexible material, 43a and 43b, is bonded to ITO electrodes 11a and 11b via conductive adhesive and / or conductive ink 44a and 44b; the window edge area is sealed with a silicone sealant 46a and 46b; polarized driving signals can be applied to the liquid crystal film 50 via bonded / soldered cables 45a and 45b respectively.

In figure 13, the liquid crystal film 50 is laminated on both sides to glass panes 41a and 41b via interlayers 42a and 42b respectively. An interlayer can be polyvinyl butyral PVB, ethylene-vinyl acetate EVA or polyurethane PU, and advantageously incorporates a UV blocking function. Preferably, an EVA interlayer is used as these have the lowest maximum processing temperature. A vacuum-bag glass laminating process is preferred over an autoclave. Suitable interlayer include EVASAFE from Bridgestone Corporation, Japan, and SLEC from Sekisui, Japan. Process guidelines for laminating PET films to glass are available from both suppliers.

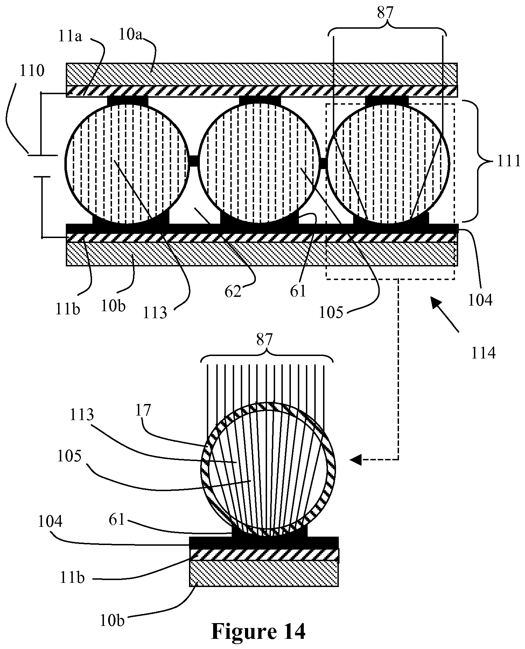

Figure 14 shows an embodiment of a chiral nematic, reflective display device 114 in a black/dark state and is described in co-pending US application entitled "Reflective Display Device" (Attorney Ref: P103447US00). Dichroic dye is not used; instead a black layer 104 on the rear electrode 11b absorbs light that is transmitted by a liquid crystal body 105 when a sufficiently large voltage 110 is applied across the electro-optical layer 111. In figure 14 when there is no applied voltage the light scattering state of a liquid crystal body 105 (as described up to now) becomes a diffusely reflecting white state as a consequence of shells 113 being maintained in a matrix having two phases: one of the phases in figure 14 is air 62 and generally surrounds a significant proportion of the shells 113, the other phase comprises polymer matrix fractions 61 that are refractive-index-matched to a shell's wall 17 and the liquid crystal's ordinary refractive index.

In accordance with co-pending US application entitled "Reflective Display Device" (Attorney Ref: P103447US00), the electro-optical layer 111 in figure 14 scatters light by reflection, refraction and diffraction and this light is characterized by two components:
1. A first component is derived from light scattering centers created in the electro-optical layer not just between the added air phase 62 and the amorphous, polymer matrix phase 61, but also between the added phase 62 and the surface of shells 113; and
2. A second component is derived from the spherulite morphology of a liquid crystal body 105 scattering light more efficiently as a consequence of introducing a surrounding matrix that has two phases (i.e. air and polymer).

In figure 14 the white state's level of diffuse reflected light from the front face of reflective, display device 114 is then a summation of these two components.

In the black/dark state of figure 14 incident light ray bundle 87 is focused by the front semi-sphere of a shell 113 because a shell is generally surrounded by air 62 within the electro-optical layer 111. The exploded view in figure 14 shows ray bundle 87 being transmitted by a liquid crystal body 105 inside a shell 113 in to the shell's wall 17, and then, due to an optical interface made by a polymer matrix fraction 61, the ray bundle 87 is absorbed by a black layer 104 with negligible reflection. Favorably, total internal reflection at a polymer/air interface is suppressed for the circular portion of a shell's rear semi-sphere in optical contact with a black, absorbing layer 104.

The following are examples of the preparation of a light scattering, chiral nematic, liquid crystal display device, and a light absorbing, dichroic-dye-doped, chiral nematic, liquid crystal display device. In the examples the microencapsulation technique for the liquid crystal bodies is in accordance with co-pending PCT application entitled "A Method For Microencapsulating Electro-Optical Fluid" (Attorney Ref: P103105PC00) by the applicant. The steps to make a display device, for example device 115 in figure 11, can be summarized as:
1. Prepare a stable, aqueous emulsion of chiral nematic, liquid crystal and (microencapsulating) polymer-precursor solution.
2. Thermally cure by free-radical polymerization to microencapsulate.
3. To recover fine shell powder: filter, allow to sediment, drain the aqueous solvent, wash, and air/vacuum dry.
4. Prepare an electro-optical ink by mixing polymer-precursor solution with shell powder until the shells are discretely and uniformly dispersed in a paste-like ink.
5. Coat the electro-optical ink by screen-printing the ink onto a first substrate.
6. Complete the display device by curing the wet print, laminating a top substrate onto it, and curing the polymer matrix to completion.

### Example 1 (microencapsulating chiral nematic, liquid crystal)

A stable, chiral nematic liquid crystal emulsion in deionised water was prepared using a limited coalescence method. A blade stirrer held the emulsion under constant stirring at 100 rpm. The liquid crystal phase had 9.66g of nematic liquid crystal MLC2058, 0.11g of chiral dopant ZLI4571 (HTP = 33.5) and 0.22g of chiral dopant S811 (HTP = 13.8), all sourced from Merck (Japan). The deionised water phase was 190 ml. The stable liquid crystal emulsion was measured using a Horiba LA920 (Japan). The liquid crystal droplet mean was 8.5 microns, the standard deviation (SD) was 1.15 microns and the coefficient of variation (SD/mean x 100) was 13.5%.

Prepared a monomer solution of 1.8g of EGDMA monomer and 0.0844g of thermal initiator Luperox 531M80 (both sourced from Sigma Aldrich). Solubilized the initiator in the monomer using a sonifier. Added the monomer solution to deionised water and passed it through a homogenizer at 6,000 PSI (APV 1,000 from SPX Corp.). The resulting monomer emulsion had a volume of 150ml and was added to 100ml (i.e., half) of the liquid crystal emulsion. Thirty minutes later 6g of polyvinyl Mowiol 4-88 (sourced from Sigma Aldrich) was added to the monomer swelled liquid crystal emulsion. Stirring was maintained at 100 rpm.

Put the monomer-swelled, liquid crystal emulsion into a pressure vessel at 82 degrees Celsius and at atmospheric pressure. Allowed the emulsion to stabilize for thirty minutes then increased the pressure vessel temperature to 99 degrees Celsius to begin polymerization. Left to polymerize for four hours. Stirring was maintained at 100 rpm throughout. Removed the suspension from the pressure vessel and allowed to cool to room temperature.

Filtered the suspension through an 17.5 microns mesh to remove any aggregate or large outliers. The trapped material was negligible (< 3% by dry weight). Allowed the filtered suspension to sediment by turning off stirring and leaving overnight. Drained the water phase to remove residuals from the polymerisation stage. A wash stage followed consisting of redispersing the shell sediment in 100ml of deionised water, allowing to sediment, and draining the water once again. The suspension was sampled during the wash stage and measured: the shell mean was 8.92 microns, the standard deviation was 1.24 microns, and the coefficient of variation was 13.9%.

The washed, shell sediment was dried in air. The sediment broke down to a powder on tapping its glass container. The shell powder was then vacuumed to remove any residual moisture. Following the vacuum stage the resulting shell powder was fine. The powder was sampled and placed on a microscope slide. When viewed under a microscope shells appeared discrete with no apparent shell aggregate. The surface of about 98% of shells appeared smooth and spherical. The spherulite morphology of the liquid crystal within shells appeared in the form of a spiral helix with equidistant-curve spacing when viewed between crossed polarizers under a microscope similar to that shown in figure 1. A minority of shells appeared as concentric, spherical helices with equidistant-curve spacing in a generally spherical body similar to that shown in figure 3. Shells have a single radial disclination line (not shown in figure 1). The curve pattern of the spherulite morphology was clear and uninterrupted. Significantly, if polymer sol fractions or gel fractions were present in a liquid crystal body then the obtained curve pattern would be interrupted by such fractions, this was not the case. The calculated refractive index of the polymer in a shell wall is 1.503. The ordinary refractive index of the microencapsulated liquid crystal (MLC2058) is 1.502.

### Example 2 (forming a second layer on shells)

The second half of the liquid crystal emulsion from example 1 was used to repeat the microencapsulation described in example 1 ahead of forming a second layer on shells as will be described now.

Removed the suspension from the pressure vessel after the microencapsulation stage was complete. Allowed to cool to room temperature then filtered the suspension through an 17.5 microns mesh to remove any aggregate or large outliers. The trapped material was negligible (< 3% by dry weight). Allowed the filtered suspension to sediment by turning off stirring and leaving overnight. Drained the water phase to remove residuals from the polymerisation stage. Redispersed the shell sediment in 100ml of deionised water and put under stirring at 100 rpm.

Prepared a monomer solution of 0.49g of EGDMA monomer and 0.0092g of thermal initiator Luperox 531M80. Solubilized the initiator in the monomer using a sonifier. Added the monomer solution to deionised water and passed it through a homogenizer at 6,000 PSI. The resulting monomer emulsion had a volume of 150ml and was added to the liquid crystal suspension (see previous paragraph). Next, 6g of polyvinyl Mowiol 4-88 was added to the liquid crystal suspension.

Without delay put the liquid crystal suspension into a pressure vessel at 99 degrees Celsius and at atmospheric pressure. Left to polymerize for four hours. Stirring was maintained at 100 rpm throughout. Removed the suspension from the pressure vessel and allowed it to cool to room temperature.

Filtered the suspension through an 17.5 microns mesh to remove any aggregate or large outliers. The trapped material was negligible (< 1% by dry weight). Allowed the filtered suspension to sediment by turning off stirring and leaving overnight. Drained the water phase to remove residuals from the polymerisation stage. A wash stage followed consisting of redispersing the shell sediment in 100ml of deionised water, allowing to sediment, and draining the water once again. The suspension was sampled during the wash stage and measured: the shell mean was 9.48 microns, the standard deviation was 1.19 microns, and the coefficient of variation was 12.6%.

The washed, shell sediment was dried in air. The sediment broke down to a powder on tapping its glass container. The shell powder was then vacuumed to remove any residual moisture. Following the vacuum stage the resulting shell powder was fine. The powder was sampled and placed on a microscope slide. When viewed under a microscope shells appeared discrete with no apparent shell aggregate. The surface of about 98% of shells appeared smooth and spherical, and the spherulite morphology of the chiral nematic, liquid crystal within shells was clear and uninterrupted when viewed between crossed polarizers under a microscope (see example 1).

### Example 3 (preparing a solvent-free, chiral nematic, liquid crystal ink)

Prepared an electro-optical ink using the shell powder from example 2. The ink's hydrophobic solution was made up using 0.281g of trimethylolpropane trimethacrylate, 1.823g of 2-phenylethyl acrylate, 1.742g of tert-butyl methacrylate, and 0.154g of photoinitiator Irgacure IRG651, all were sourced from Sigma-Aldrich. The solution was heated to 60 degrees Celsius, sonified to ensure all components were solubilized, and then cooled to room temperature (20 degrees Celsius). Added 3g of example 2's shell powder to 3g of the solution and allowed the shells to be wetted by the solution. Sonified the electro-optical ink at low power to disperse the shells in the continuous phase and achieve a uniform, paste-like consistency. The resulting electro-optical ink comprises chiral nematic, liquid crystal inside hydrophobic polymer shells and dispersed in a hydrophobic monomer solution. The ink can be cured by ultra-violet light and is solvent-free.

### Example 4 (preparing a chiral nematic, liquid crystal, display device)

Screen-printed example 3's chiral nematic, liquid crystal ink onto ITO coated PET film (OC70 from CPfilms Inc.). Used a DEK 265GSX fitted with a stainless steel 230 mesh, a polyurethane squeegee, and a flood bar. The resulting wet print had acceptable flatness and was free of shell void areas in the printed area. Viewing the wet print under the microscope confirmed that shells remained spherical and free of apparent defects. When viewed between cross polarizers the spiral helix curve pattern of the spherulite morphology was clear and uninterrupted.

Cured the print in a nitrogen-flooded chamber at 10mWatts per cms2 of ultra-violet (365nm peak wavelength) for 5 minutes. Laminated a covering OC70 substrate to the cured print using ink solution from example 3. Cured the resulting liquid crystal film with ultra-violet light for an additional 5 minutes. Trimmed the liquid crystal film and applied a copper buzzbar connection to the ITO electrode on each substrate.

Applied an 200VAC square wave signal to the film. Its powered state is transparent and haze-free for a range of viewing angles confirming that the refractive index match of polymer matrix, shell wall polymer and ordinary index of the liquid crystal are a match. In the light scattering state the film is translucent. Under the microscope the shells in the film retain their spherical shape, there is no evidence that curing the printed ink has affected the shells. Between crossed polarizers (under a microscope) shells generally appear as shown in figure 1 and have a single radial disclination line (not shown in figure 1).

### Example 5 (microencapsulating dichroic-dye-doped, chiral nematic, liquid crystal)

In example 5 black, dichroic-dye-doped, nematic liquid crystal ZLI4714/3 from Merck (Japan) was used (as supplied) instead of example 1's nematic liquid crystal (MLC2058). The ratio of chiral dopant to the nematic liquid crystal was increased with respect to example 1. The liquid crystal phase in the emulsion had 9.08g of ZLI4714/3, 0.3125g of ZLI4571 and 0.604g of S811. Microencapsulated the dichroic-dye-doped, chiral nematic, liquid crystal in accordance with example 1, and applied a second shell layer in accordance with example 2.

Example 6 (preparing a dichroic-dye-doped, chiral nematic, liquid crystal, display device) Prepared a dichroic-dye-doped, chiral nematic, liquid crystal ink using the shell powder from example 5 and following the description in example 3. Screen-printed the ink onto ITO coated PET film. Viewing the wet print under the microscope confirmed that shells remained spherical and free of apparent defects. When viewed between cross polarizers the spiral-helix, curve pattern of the spherulite morphology was apparent thought the spacing between curves was significantly reduced with respect to that observed for example 4. When viewing shells it is necessary to increase the microscope's light intensity to overcome light absorption by the dichroic dye, and increase magnification to overcome the fine spacing between curves (with respect to example 4).

Continued assembling a display device as per example 4. Under a microscope the shells in the resultant film retained their spherical shape and the spiral-helical, curve pattern within shells seemed uninterrupted. Applied an 200VAC square wave signal to the film. Its powered state was transparent and appeared haze-free over a wide range of viewing angles; it had reduced light transmittance with respect to example 4. The light absorbing state (i.e. unpowered) was black and opaque.

## Claims

1. A cholesteric, liquid crystal device comprising a plurality of discrete spheroidal bodies (101, 102, 103) of chiral nematic, liquid crystal, microencapsulated by a polymer shell and arranged in an electro-optical layer (24a, 24b) sandwiched between electrodes (11a,11b), said bodies of liquid crystal being selectively operable in at least two states, a first state that transmits light through a liquid crystal body and a second state that scatters or absorbs light in a liquid crystal body, each body in said second state having an ordered liquid crystal texture that minimizes disclinations or domains within the liquid crystal body, said liquid crystal texture comprising a superstructure of helices of chiral nematic, liquid crystal arranged in a lamellar-like structure (133,134; 143,144) having curvature and forming a generally concentric, equidistant-curve pattern (120, 123, 124, 125) within a generally spherical body.

2. The device according to claim 1 wherein the liquid crystal comprises dichroic-dye doped, chiral nematic, liquid crystal which in the second state absorbs light.

3. The device according to claim 1 wherein said bodies of liquid crystal are selectively operable in one or more states intermediate said first and second states.

4. The device according to claim 1 where, in use, said liquid crystal bodies approximate a single domain in said second state.

5. The device according to claim 1 wherein said liquid crystal bodies have only one disclination line when in said second state, and the disclination line is a radial or a diametrical line.

6. The device according to claim 1 wherein said lamellar-like structure comprises a first lamella (134) having a minimum refractive index corresponding to a liquid crystal's ordinary refractive index and an average refractive index taken over adjacent liquid crystal director regions, and a second lamella (133) having a maximum refractive index corresponding to a liquid crystal's extraordinary index and an average refractive index taken over adjacent liquid crystal director regions.

7. The device according to claim 1 wherein the period (135) of the laminar-like structure is half the pitch (136) of said helices.

8. The device according to claim 1 wherein said helices are aligned perpendicular to a surface of a polymer shell's inner wall and arranged generally in a radial direction.

9. The device according to claim 1, wherein said superstructure has an index of refraction which is generally spherically symmetrical and varies continuously along a radial.

10. The device according to claim 1 wherein said superstructure has a morphology analogous with negative polymer spherulite.

11. The device according to claim 2 wherein the pitch length of said helices has a lower limit of preferably > (0.74 divided by the extraordinary refractive index of said liquid crystal), and an upper limit of ≤ 0.5 times the diameter of a liquid crystal body, more preferably ≤ 0.333 times the diameter, and most preferably ≤ 0.2 times the diameter.

12. The device according to claim 1 wherein said microencapsulated bodies are spherical.

13. The device according to claim 12 comprising a monolayer (24b) of liquid crystal bodies, wherein the diameters of microencapsulated liquid crystal bodies fall within a narrow range up to the thickness of the electro-optical layer.

14. The device according to claim 12 wherein said second state of said liquid crystal body when viewed between crossed polarizers under a microscope appears as one of:
a) a spherical helix with equidistant-curve spacing (126);
b) concentric spherical helices with equidistant-curve spacing (126); or
c) concentric circles with equidistant-curve spacing (126).

15. The device according to claim 1 wherein said microencapsulated liquid crystal body is free of polymer network, or polymer fractions, or solubilized additives that could induce a polydomain or focal conic texture.

## Patentansprüche

1. Cholesterische Flüssigkristallanzeige, die eine Vielzahl von diskreten kugeligen Körpern (101, 102, 103) aus chiralem nematischem Flüssigkristall umfasst, der von einer Polymerhülle mikroverkapselt ist und in einer elektrooptischen Schicht (24a, 24b) angeordnet ist, die zwischen Elektroden (11a, 11b) eingeschoben ist, wobei die Flüssigkristallkörper selektiv in mindestens zwei Zuständen funktionsfähig sind, einem ersten Zustand, der Licht durch einen Flüssigkristallkörper überträgt und einem zweiten Zustand, der Licht in einem Flüssigkristallkörper streut oder absorbiert, wobei jeder Körper im zweiten Zustand eine geordnete Flüssigkristalltextur aufweist, die Disklinationen oder Domänen im Inneren des Flüssigkristallkörpers minimiert, wobei die Flüssigkristalltextur eine Superstruktur von Helices des chiralen nematischen Flüssigkristalls umfasst, der in einer lamellenähnlichen Struktur (133, 134; 143, 144) angeordnet ist, die eine Krümmung aufweist und ein allgemein konzentrisches, gleichabständiges Krümmungsmuster (120, 123, 124, 125) im Inneren eines allgemein kugelförmigen Körpers bildet.

2. Vorrichtung nach Anspruch 1, wobei der Flüssigkristall mit dichroitischem Farbstoff dotierten, chiralen nematischen Flüssigkristall umfasst, der im zweiten Zustand Licht absorbiert.

3. Vorrichtung nach Anspruch 1, wobei die Flüssigkristallkörper selektiv in einem oder mehreren Zuständen zwischen dem ersten und dem zweiten Zustand funktionsfähig sind.

4. Vorrichtung nach Anspruch 1, wobei die Flüssigkristallkörper in Verwendung eine einzelne Domäne im zweiten Zustand approximieren.

5. Vorrichtung nach Anspruch 1, wobei die Flüssigkristallkörper im zweiten Zustand nur eine Disklinationslinie aufweisen und die Disklinationslinie eine radiale oder diametrale Linie ist.

6. Vorrichtung nach Anspruch 1, wobei die lamellenähnliche Struktur eine erste Lamelle (134) mit einem minimalen Brechungsindex, der einem normalen Brechungsindex eines Flüssigkristalls und einem über benachbarte Flüssigkristalldirektorbereiche gemittelten Brechungsindex entspricht, und eine zweite Lamelle (133) mit einem maximalen Brechungsindex umfasst, der einem außerordentlichen Index und einem über benachbarte Flüssigkristalldirektorbereiche gemittelten Brechungsindex entspricht.

7. Vorrichtung nach Anspruch 1, wobei die Periode (135) der lamellenähnlichen Struktur die Hälfte der Steigung (136) der Helices ist.

8. Vorrichtung nach Anspruch 1, wobei die Helices senkrecht auf eine Oberfläche einer Polymerhüllen-Innenwand ausgerichtet sind und allgemein in einer radialen Richtung angeordnet sind.

9. Vorrichtung nach Anspruch 1, wobei die Superstruktur einen Brechungsindex aufweist, der allgemein kugelsymmetrisch ist und fortlaufend entlang einer Radialen variiert.

10. Vorrichtung nach Anspruch 1, wobei die Superstruktur eine zu negativem Polymersphärolith analoge Morphologie aufweist.

11. Vorrichtung nach Anspruch 2, wobei die Steigungslänge der Helices eine untere Grenze von vorzugsweise > (0,74 dividiert durch den außerordentlichen Brechungsindex des Flüssigkristalls) und eine obere Grenze von ≤ 0,5 mal dem Durchmesser eines Flüssigkristallkörpers, bevorzugter ≤ 0,333 mal dem Durchmesser und am bevorzugtesten ≤ 0,2 mal dem Durchmesser aufweist.

12. Vorrichtung nach Anspruch 1, wobei die mikroverkapselten Körper kugelförmig sind.

13. Vorrichtung nach Anspruch 12, die eine Monoschicht (24b) von Flüssigkristallkörpern umfasst, wobei die Durchmesser der mikroverkapselten Flüssigkristallkörper in einen engen Bereich bis zur Dicke der elektrooptischen Schicht fallen.

14. Vorrichtung nach Anspruch 12, wobei der zweite Zustand des Flüssigkristallkörpers bei Betrachtung zwischen gekreuzten Polarisatoren unter einem Mikroskop als eines von Folgendem erscheint:
a) eine kugelförmige Helix mit gleichmäßigen Krümmungsabständen (126);
b) konzentrische kugelförmige Helices mit gleichmäßigen Krümmungsabständen (126); oder
c) konzentrische Kreise mit gleichmäßigen Krümmungsabständen (126).

15. Vorrichtung nach Anspruch 1, wobei der mikroverkapselte Flüssigkristallkörper frei von einem Polymernetzwerk oder Polymerfraktionen oder aufgelösten Zusätzen ist, die eine Polydomäne oder eine fokale konische Textur herbeiführen könnten.

## Revendications

1. Dispositif à cristaux liquides cholestériques, comprenant une pluralité de corps sphéroïdaux distincts (101, 102, 103) de cristal liquide nématique chiral, micro-encapsulés par une enveloppe polymère et agencés dans une couche électro-optique (24a, 24b) prise en sandwich entre des électrodes (11a, 11b), lesdits corps de cristal liquide étant actionnables de manière sélective dans au moins deux états, un premier état qui transmet de la lumière à travers un corps de cristal liquide et un second état qui diffuse ou absorbe de la lumière dans un corps de cristal liquide, chaque corps dans ledit second état ayant une texture de cristal liquide ordonnée qui réduit à un minimum des désinclinaisons ou domaines à l'intérieur du corps de cristal liquide, ladite texture de cristal liquide comprenant une superstructure d'hélices de cristal liquide nématique chiral agencée dans une structure de type lamellaire (133, 134 ; 143 ; 144) ayant une courbure et formant un motif de courbes équidistantes généralement concentriques (120, 123, 124, 125) à l'intérieur d'un corps généralement sphérique.

2. Dispositif selon la revendication 1, dans lequel le cristal liquide comprend un cristal liquide nématique chiral dopé par colorant dichroïque, qui, dans le second état, absorbent de la lumière.

3. Dispositif selon la revendication 1, dans lequel lesdits corps de cristal liquide sont actionnables de manière sélective dans un ou plusieurs états entre lesdits premier et second états.

4. Dispositif selon la revendication 1, dans lequel, en utilisation, lesdits corps de cristal liquide se rapprochent d'un unique domaine dans ledit second état.

5. Dispositif selon la revendication 1, dans lequel lesdits corps de cristal liquide ont uniquement une ligne de désinclinaison dans ledit second état, et la ligne de désinclinaison est une ligne radiale ou diamétrale.

6. Dispositif selon la revendication 1, dans lequel ladite structure de type lamellaire comprend une première lamelle (134) ayant un indice de réfraction minimal correspondant à un indice de réfraction ordinaire de cristal liquide et un indice de réfraction moyen pris sur des régions de directeur de cristal liquide adjacentes, et une seconde lamelle (133) ayant un indice de réfraction maximal correspondant à un indice extraordinaire de cristal liquide et un indice de réfraction moyen pris sur des régions de directeur de cristal liquide adjacentes.

7. Dispositif selon la revendication 1, dans lequel la période (135) de la structure de type lamellaire est la moitié du pas (136) desdites hélices.

8. Dispositif selon la revendication 1, dans lequel lesdites hélices sont alignées perpendiculairement à une surface d'une paroi interne de l'enveloppe polymère et agencées généralement dans une direction radiale.

9. Dispositif selon la revendication 1, dans lequel ladite superstructure a un indice de réfraction qui est généralement à symétrie sphérique et varie de manière continue le long d'une direction radiale.

10. Dispositif selon la revendication 1, dans lequel ladite superstructure a une morphologie analogue à une sphérulite polymère négative.

11. Dispositif selon la revendication 2, dans lequel la longueur de pas desdites hélices a une limite inférieure de préférence > (0,74 divisé par l'indice de réfraction extraordinaire dudit cristal liquide), et une limite supérieure ≤ 0,5 fois le diamètre d'un corps de cristal liquide, de façon davantage préférée ≤ 0,333 fois le diamètre, et de la façon que l'on préfère le plus ≤ 0,2 fois le diamètre.

12. Dispositif selon la revendication 1, dans lequel lesdits corps micro-encapsulés sont sphériques.

13. Dispositif selon la revendication 12, comprenant une monocouche (24b) de corps de cristal liquide, les diamètres de corps de cristal liquide micro-encapsulés appartenant à une plage étroite allant jusqu'à l'épaisseur de la couche électro-optique.

14. Dispositif selon la revendication 12, dans lequel ledit second état dudit corps de cristal liquide, lorsque vu entre des polariseurs croisés sous un microscope, apparaît comme l'un parmi :
a) une hélice sphérique avec un espacement de courbes équidistantes (126) ;
b) des hélices sphériques concentriques avec un espacement de courbes équidistantes (126) ; ou
c) des cercles concentriques avec un espacement de courbes équidistantes (126).

15. Dispositif selon la revendication 1, dans lequel ledit corps de cristal liquide micro-encapsulé est exempt de réseau polymère, ou de fractions polymères, ou d'additifs solubilisés qui pourraient induire un polydomaine ou une texture conique focale.
